Europäisches Patentamt

European Patent Office

Office européen des brevets

(11) Veröffentlichungsnummer: **0 233 979 B1**

(19)

# (12) EUROPÄISCHE PATENTSCHRIFT

(45) Veröffentlichungstag der Patentschrift: **20.06.90**

(21) Anmeldenummer: **86105278.5**

(22) Anmeldetag: **16.04.86**

(51) Int. Cl.⁵: **E02D 31/00, B09B 1/00**

(54) **Abdichtung von Deponien.**

(30) Priorität: **18.02.86 DE 3605062**

(43) Veröffentlichungstag der Anmeldung:
**02.09.87 Patentblatt 87/36**

(45) Bekanntmachung des Hinweises auf die Patenterteilung:
**20.06.90 Patentblatt 90/25**

(84) Benannte Vertragsstaaten:
**AT BE CH DE FR GB IT LI NL SE**

(56) Entgegenhaltungen:
**EP-A- 0 219 598**
**EP-A- 0 230 667**
**DE-A- 3 409 591**
**DE-A- 3 424 981**
**DE-A- 3 519 124**
**DE-C- 422 357**
**GB-A- 2 057 537**

(73) Patentinhaber: **Niederberg-Chemie GmbH,
Postfach 11 63, D-4133 Neukirchen-Vluyn(DE)**

(72) Erfinder: **Schlütter, Aloys, Rheinstrasse 42,
D-4152 Kempen 2(DE)**
Erfinder: **Kaewert, Klaus, Gänsestrasse 4,
D-4000 Düsseldorf 13(DE)**

ACTORUM AG

## Beschreibung

Die Erfindung betrifft eine Abdichtung für Deponien, kontaminierte Flächen oder dergleichen, wobei der abzudichtende Bereich unter Verwendung eines Messerschildes bergmännisch unterfahren wird.

In der Vergangenheit wurden Deponien, insbesondere Mülldeponien, häufig mit unzureichender Abdichtung zum Grundwasser hin oder überhaupt ohne Abdichtung errichtet, so daß aus diesen mit dem Oberflächenwasser Schadstoffe in den Boden einsickern und in das Grundwasser gelangen können. Das gleiche gilt für kontaminierte Flächen, z.B. Industrieflächen, auf denen chemische Rückstände, insbesondere Kohlenwasserstoffverbindungen und/oder Schwermetalle sich niedergeschlagen haben.

Nach einem älteren Vorschlag (EP-A 219 598, veröffentlicht am 29.4.87) sollen die abzudichtenden Bereiche bergmännisch unterfahren werden. Bei dem bergmännischen Unterfahren wird eine Erdschicht und/oder Gesteinsschicht unterhalb des abzudichtenden Bereiches abgebaut. In dem entstandenen Hohlraum wird eine Dichtung hergestellt. Diese Dichtung kann durch eine ein- und/oder mehrschichtige Folie gebildet werden. Vorzugsweise wird diese Folie zwischen schützende Vliese aus Glasfasermaterial und zwischen verfestigte Mörtel bzw. Betonschichten oder dergleichen Schichten eingebracht.

Befindet sich die Abdichtungsschicht auf dem Liegenden, so entsteht zwischen der Abdichtungsschicht und dem Hangenden ein Hohlraum. Ist die Abdichtungsschicht unmittelbar unter dem Hangenden vorgesehen, so stellt sich zwischen der Abdichtungsschicht und dem Liegenden das Problem eines zu verfüllenden Hohlraumes. In jedem Fall ist man bemüht, derartige Hohlräume zu verfüllen, um Setzbewegungen auf ein Minimum zu beschränken.

Zum Verfüllen wird vorzugsweise das beim bergmännischen Abbau gewonnene Material herangezogen. Auf Grund der mit dem bergmännischen Abbau verbundenen Auflockerung dieses Materiales, kann dieses nur teilweise zum Versatz in die oben angesprochenen Hohlräume gebracht werden.

Im Sinne der Beschränkung der Setzbewegungen wird der Versatzmasse ein Binder zugegeben. Der Binder kann aus Zementmörtel bestehen. Bevorzugt wird ein schnellbindender Baustoff. Dazu gehört Alphasulfathalbhydrat, welches aus den Rückständen der Kalkwäsche von schwefelhaltigen Rauchgasen gewonnen wird. Es kann aber auch aus anderen Rückständen gewonnen werden.

Für den bergmännischen Abbau ist zu berücksichtigen, daß unterhalb von abzudichtenden Bereichen, wie beispielsweise Deponien, vorwiegend Lockergestein anzutreffen ist. Das Lockergestein kann schwerwiegende Einbrüche verursachen. Das gilt vor allem dann, wenn Grundwasserströme angeschnitten werden bzw. wenn Druckwasserbereiche angeschnitten werden. In solchen Fällen hat das Lockergestein eine überrauschend höhe Fließfähigkeit.

Im Bergbau wird auftretendem Lockergestein mit Injektionen begegnet. Als Injektionsmittel wird überwiegend Polyorethan verwendet. Es kann aber auch Wasserglas in Verbindung mit bestimmten Säureestern verwendet werden. Diese Injektionsmittel haben die Aufgabe, das Lockergestein zu verfestigen. Verfestigt wird sowohl der Bereich oberhalb des bergmännischen Abbaus, als auch die Abbaufront. Dabei ergeben sich allerdings Kosten in der Größenordnung von 300,-- bis 600,-- DM/m³ Lockergestein. Das gilt allein für den Aufwand an Injektionsmitteln. Hinzu kommt der Arbeitsaufwand, der notwendig ist zum Einbringen der Injektionsmittel, d.h., zum Bohren der Injektionslöcher sowie zum Einschieben der Injektionslanzen. Ferner ist die langdauernde Betriebsunterbrechung für die Injektionen zu berücksichtigen. Während diese Störungen im Bergbau üblicherweise der Anzahl nach gering sind, wäre bei Anwendung dieser reinen Bergbautechnologie auf die hier angesprochene Abdichtung mit einer dauernden Störung zu rechnen. D.h., während des gesamten bergmännischen Abbaus müßte injiziert werden. Damit würde sich der Abbau und das Injizieren in Intervallen ablösen.

Der Erfindung liegt die Aufgabe zugrunde, eine kostengünstigere Arbeitsweise zu schaffen. Nach der Erfindung wird das unter Verwendung eines Messerschildes dadurch erreicht, daß der Messcherschild in Vortriebsrichtung aus mehreren miteinander lösbar verbundenen Abschnitten besteht oder ein Element einer Messerschildreihe bildet. Nach der Erfindung werden die Messer am Hangenden so weit vorgetrieben, daß sie mindestens um das Maß von 0,6 m weiter in der Abbaufront sitzen, als beim nachfolgenden Schnitt des Abbaugerätes von der Abbaufront abgebaut wird. In der Regel beträgt dieses Maß 0,9 bis 1,2 m.

Zwar ist aus der DE-A 3 409 591 ein Verfahren zur nachträglichen Herstellung einer unterirdischen Dichtungssohle im Erdboden unter einer auf diesem gelagerten Mülldeponie gezeigt. Dabei werden aber von einer Seite der Mülldeponie ausgehend eine Anzahl sich unter der Mülldeponie im wesentlichen waagerecht und parallel zueinander hindurch erstreckende Bohrungen eingebracht. Die Bohrungen können sich überlappen, können jedoch auch im Abstand voneinander angeordnet sein. Bei im Abstand voneinander vorgesehenen Bohrungen wird Dichtungsmasse in den Zwischenraum zwischen die Bohrungen injiziert. Solche Bohrungen beinhalten keinen bergmännischen Abbau. Beim bergmännischen Abbau sind Bohrungen lediglich als Sprengbohrungen oder Entspannungsbohrungen usw. bekannt, wobei die Bohrungen nur im Zusammenhang mit dem Sprengvortrieb mittelbar Berührung haben. Dies ist jedoch viel zu weit weg, als daß von einem bergmännischen Abbau gesprochen werden kann.

Im übrigen ist der bergmännische Abbau dadurch gekennzeichnet, daß auf breiter Front z.B. ein Kohleflöz abgebaut wird. Diese breite Front trägt die Bezeichnung Streb.

Bei den heute gebräuchlichen Abbaumethoden wird im Streb ein Hobel oder ein Schrämwalzenlader hin- und hergehend bewegt und dadurch Abbaumaterial hereingewunden.

Nach dem eingangs angesprochenen, nicht vorveröffentlichten älteren Vorschlag erfolgt der Abbau unterhalb der Deponie anders als der herkömmliche Abbau mit Hobel oder Schrämwalzenlader. Bei dem älteren Vorschlag erfolgt der Abbau in Form eines Aufhauens. Das Aufhauen beinhaltet das Anlegen eines Strebes. Das heißt, das Aufhauen ist an sich nur die Vorstufe zum bergmännischen Abbau. Nach dem älteren Vorschlag wird aus der Vorbereitungshandlung, dem Aufhauen, der eigentliche Abbauvorgang. Dies ist bereits etwas Neues für den bergmännischen Abbau. Hintergrund dieser Maßnahme ist die gezielte Gestaltung einer äußerst vorteilhaften Gewölbewirkung.

Eine zusätzliche Sicherheit für den erfindungsgemäßen Abbau mit einem Messerschild wird durch eine geneigte Abbaufront erreicht. Mit der Neigung entsteht eine Böschung und wird das Lockergestein am Riesel- bzw. Fließvorgang gehindert.

Weitere Sicherheit wird nach der Erfindung mit seitlichen Messern und/oder seitlichen Ausbauhilfen erreicht. Die seitlichen Ausbauhilfen sind bei seitlicher Anordnung eines Förderers zum Abfördern der Ausbruches vorzugsweise an der Seite des Förderers vorgesehen. Die Ausbauhilfen können dort zum Schutz des Förderers verbleiben. Ein Ausbau ist in dem Sinne notwendig, um nach Vorrücken des Messerschildes ein Niederbrechen des Hangenden zu vermeiden.

Wahlweise bildet die Ausbauhilfe zugleich einen Teil oder den ganzen Maschinenrahmen für den Förderer. Der Vorteil liegt darin, daß der Maschinenrahmen des Förderers bereits eine erhebliche Tragfähigkeit bzw. Steifigkeit besitzt und dadurch einen Teil der Abstützung des Hangenden und/oder der seitlichen, angeschnitten Erdschichten übernehmen kann. Die baulichen Aufwendungen für die notwendige Abstützung vermindert sich dadurch.

Nach einem weiteren Merkmal der Erfindung besteht der Messerschild in Vortriebsrichtung aus mehreren, miteinander lösbar verbundenen Abschnitten. Damit ergeben sich außerordentliche Betriebsvorteile, wenn seitlich oder vor und hinter der Deponie Baugruben ausgehoben worden sind und das Abbaugerät und der Messerschild in die Baugruben gefahren werden können. Dann kann mit Hilfe eines Baustellenkranes das heraustretende Abbauwerkzeug aufgenommen, um 180°C geschwenkt und zum erneuten Aufhauen wieder angesetzt werden. Das gleiche gilt für den Messerschild. Dabei braucht der Messerschild nicht umständlich in seine Einzelteile zerlegt zu werden, sondern ist ein Abkoppeln der verschiedenen Abschnitte ausreichend.

Eine derartige Abbauverfahrensweise besteht demnach darin, daß ausgehend von einer ausgehobenen Baugrube ein Aufhauen bis zu der anderen Seite des abzudichtenden Bereiches (Deponie) eingebracht wird. Auf der anderen Seite angelangt setzt ein paralleles Aufhauen in umgekehrter Vortriebsrichtung ein. Dieses Aufhauen in umgekehrter Richtung schließt sich unmittelbar an das erste bzw. das vorangehende Aufhauen. Infolgedessen kann die dort liegende Seite der bereits eingebrachten Abdichtungsbahn mit der korrespondierenden Seite der mit dem neuen Aufhauen eingebrachten Abdichtungsbahn verschweißt oder in sonstiger Weise abgedichtet werden.

Die einzelnen Abschnitte haben nach der Erfindung höchstens in Vortriebsrichtung eine Länge von 3 m, vorzugsweise eine Breite von 1,5 bis 2 m bzw. ein Breitenmaß , das gleich dem Maß der Bautiefe des Abbaugerätes in Vortriebsrichtung ist. Infolgedessen kann die Baugrube im Fuß relativ schmal gehalten werden, das verringert den für derartige Baugruben erheblichen Aufwand.

Nach der Erfindung besitzt jeder Abschnitt des Messerschildes eine besondere Funktion. Dem in Vortriebsrichtung ersten Messerschildabschnitt sind die Messer zugewiesen. Der nächste Abschnitt nimmt die Vorrichtungen zum Einbringen der Abdichtungsfolie und/oder Armierung und/oder Dränage auf. Ein dritter Abschnitt ist für das Einbringen des Versatzes sowie der Festiger für den Versatz vorgesehen.

Wahlweise besitzt der dritte Abschnitt zugleich auslaufende Schwanzflossen, die ein vorteilhaftes Austreten des Messerschildes sicherstellen. Die Schwanzflossen verjüngen sich zum Ende hin. Zur Minimierung des Setzungsproblems wird der Versatz vorzugsweise so eingebracht, daß die Böschung des Versatzes ein relativ geringes Maß innerhalb des Messerschildausbaus am Hangendmesser beginnt.

Wahlweise setzt sich die gesamte Abbaufront für eine erfindungsgemäße Abdichtung aus einzelnen Messerschilden zusammen. Die Messerschilde bilden dann Elemente. Die Elementbreite beträgt max. 8 m. Eine solche Elementbauweise ist von Vorteil für geringe Abbaumächtigkeiten. Dann hat der Maschinenrahmen des Messerschildes relativ geringe Abmessungen. Je geringer diese Abmessungen sind, desto besser ist die Begehbarkeit des Messerschildes. Aus anderer Sicht kann das auch wie folgt genutzt werden: Durch geringe Abmessungen für den Maschinenrahmen kann unter Berücksichtigung des für die Begehung des Messerschildes erforderlichen Maßes eine geringe Abbaumächtigkeit erzielt werden. Die damit verknüpfte Verringerung der Abbaumächtigkeit bewirkt eine Reduzierung der Abbaukosten.

In diesem Sinne ist auch von Vorteil, wenn die einzelnen Elemente in Vortriebsrichtung versetzt zueinander oder hintereinander arbeiten. Dann ist damit zu rechnen, daß sich über den einzelnen Elementen relativ kleine Erdgewölbe bzw. Gewölbe aus dem abzudichtenden Material bilden, deren Belastung sehr viel geringer als das Gewicht der gesamten darüberstehenden Materialsäule ist.

In der Zeichnung ist ein Ausführungsbeispiel der Erfindung dargestellt. Es zeigen:

Figur 1 in schematischer Draufsicht eine Deponie. Figur 2 und 3 ein erfindungsgemäßes Aufhauen in einer Einzelansicht.

Figur 4 eine schematische Schnittdarstellung durch einen Abbau mit erfindungsgemäßem Messerschild.

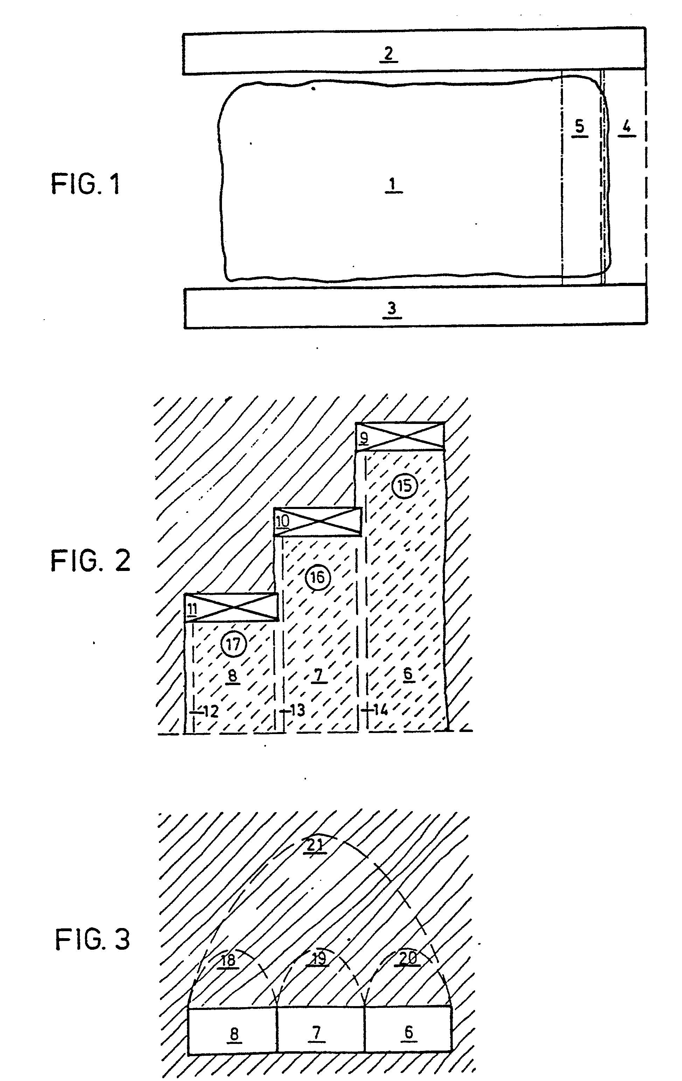

Nach Figur 1 sind seitlich einer mit 1 bezeichneten Deponie langgestreckte, geradlinig verlaufende Baugruben 2 und 3 eingebracht worden. Die Baugruben sind nach oben hin offen und z.B. mit einem «Berliner Verbau» versehen. Nach der Erfindung wird beginnend mit einer Seite der Deponie 1 ein Aufhauen 4 eingebracht.

Das Aufhauen 4 beginnt in der Baugrube 2 und endet in der Baugrube 3. Unmittelbar an das Aufhauen 4 schließt sich ein strichpunktiert dargestelltes Aufhauen 5, das in der Baugrube 3 beginnt und in der Baugrube 2 endet. Dies setzt sich fort, bis das andere Ende der Deponie 1 erreicht ist.

Nach Figur 2 und 3 werden zeitversetzt 3 Aufhauen 6, 7 und 8 begonnen. Die dabei verwendeten Ausbruchwerkzeuge einschließlich Messerschilde sind mit 9, 10 und 11 bezeichnet. Bis auf verbleibende schmale Strecken 12, 13, 14 zum Abtransport des Ausbruchs sind die beim Abbau entstandenen Hohlräume hinter den einzelnen Werkzeugen bzw. Schilden 9, 10, 11 sofort mit Versatz verfüllt und verfestigt worden. Die verfüllten und verfestigten Zonen sind mit 15, 16 und 17 bezeichnet und gestrichelt dargestellt.

Wie aus Figur 3 ersichtlich ist, bilden sich über den Aufhauen 6, 7 und 8 Materialgewölbe 18, 19 und 20. Die Materialgewölbe sind vereinfacht dargestellt und geben quantitativ das Belastungsverhältnis wieder. Dies ist im Vergleich zu einem Gewölbe 21 für ein Aufhauen mit einer Breite, wie es die einzelnen Aufhauen 6, 7 und 8 aufweisen, sehr viel geringer.

Im Unterschied zu dem nach Figur 2 in der Draufsicht treppenartigen Verlauf der Aufhauen 6, 7 und 8, kann die Abbaufront anderer Aufhauen auch andersförmig verlaufen. Dann liegen das erste, dritte, fünfte usw. Messerschild und Ausbruchwerkzeug auf gleicher Höhe, das gleiche gilt für Messerschild und Ausbruchwerkzeug des zweiten, vierten, sechsten usw. Aufhauens.

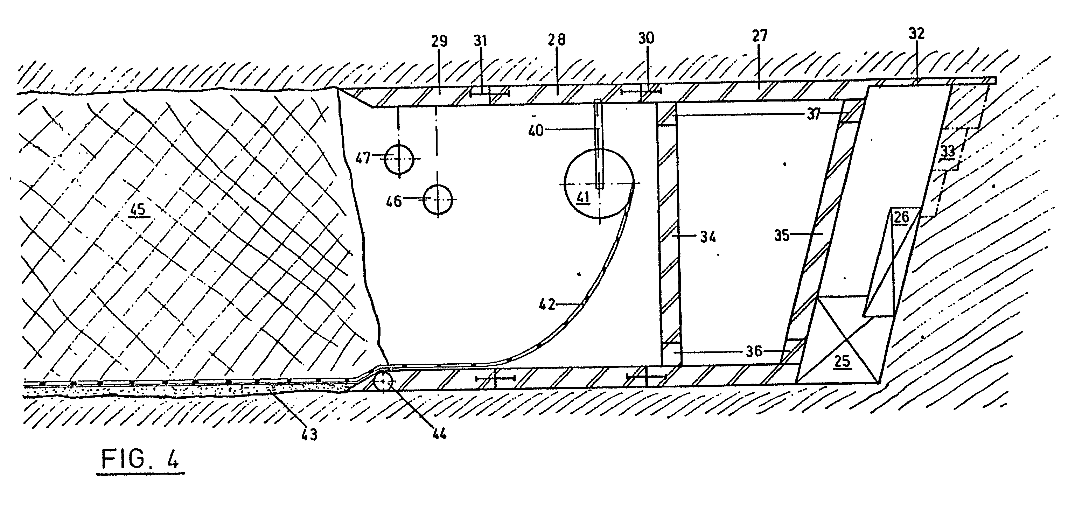

In Figur 4 ist ein Ausbruchwerkzeug mit Messerschild schematisch dargestellt. An der geneigt verlaufenden Abbaufront steht ein Walzenschrämlader 25 mit Walze 26 und nicht dargestelltem Kettenkratzer. Der Walzenschrämlader läuft an der Abbaufront hin und her bzw. auf und ab. Die Auf- und Ab-Bewegung wird durch einen Schwenkarm bewirkt, die hin und hergehende Bewegung durch Verfahren des Walzenschrämladers. Der Walzenschrämlader 25 übergibt den Ausbruch an einen nicht dargestellten Kettenförderer. Der Kettenförderer ist mit einem längenänderbaren Bandförderer in Wirkverbindung, der seitlich am Aufhauen angeordnet ist.

Das aus Figur 4 ersichtliche Messerschild besteht aus 3 Abschnitten 27, 28 und 29, die durch lösbare Gelenkstücke 30 und 31 miteinander verbunden sind. Der Abschnitt 27 ist mit einer Vielzahl von Messern 32 versehen. Die Messer 32 sind so weit aus dem Abschnitt 27 vorfahrbar, daß sie nach einem Schnitt der Schrämwalze mit einer Ausbruchtiefe von 40 cm immer noch 1 m im Lockergestein vorragen. Das verhindert mit dem im Ausführungsbeispiel vorgesehenen Abböschung von 10° ein Abbrechen der Abbaufront. Der Abschnitt 27 hat ebenso wie die Abschnitte 28 und 29 eine Rechteckform mit einer Breite von 6 m und einer Höhe von 1,5 m. Dabei setzt sich der Abschnitt 27 aus Hangendmessern, Sohlmessern und seitlich angeordneten Messern zusammen. Die seitlich angeordneten Messer sind gestuft angeordnet, wie bei 33 gestrichelt dargestellt. Sie haben gleichfalls die Aufgabe, ein Ausbrechen der Abbaufront zu verhindern.

Die Sohlmesser haben lediglich die Funktion, den Messerschild in Vortriebsrichtung mitzubewegen. Die Messerbreite ist jeweils 25 cm. Die Messer sind an den einander gegenüberliegenden Flächen ineinander geschachtelt bzw. gleiten dichtend aneinander, so daß insbesondere am Hangenden kein darüberliegendes Material zwischen den Messern durchdringen kann. Die Messer sind in Führungen in Vortriebsrichtung hin- und hergehend verschiebbar gehalten. Die Führungen können durch Kästen oder durch Winkel oder T-Profile gebildet werden. Die Messer werden einzeln durch hydraulisch betätigte Kraftkolben bewegt. Die Messer können auch pneumatisch angetrieben werden. Alle Messerführungen sind an einem Rahmen des Messerschildes befestigt, der aus Stützen 34 und 35 sowie Liegendschwellen 36 und Hangendschwellen 37 besteht. Die Stützen 34 und 35 sind ebenso wie die Liegendkufen 36 und Hangendschwellen 37 in der Zeichnung einteilig dargestellt. Sie können jedoch auch zur Verringerung der Bauhöhe und/oder Verringerung der Baubreite des Messerschildes mehrteilig ausgebildet sein.

Der Abschnitt 28 besitzt ein Gehänge 40 für eine Abdichtungsbahnrolle 41. Von der Rolle 41 wird eine Abdichtungsbahn 42 mit fortschreitender Bewegung des Messerschildes abgezogen. Die Abdichtungsbahn gleitet dabei über den Boden des Abschnittes 29 und legt sich auf eine Erdbetonschicht 43. Die Erdbetonschicht wird aus einer Aufgabeleitung 44 auf das Liegende aufgebracht und sichert eine glatte Auflage.

Der Zwischenraum zwischen der Abdichtungsfolie 42 und dem Hangenden wird durch Versatz 45 ausgefüllt. Der Versatz ist Blasversatz. Dazu ist eine Versatzleitung 46 im Abschnitt 29 vorgesehen. Über der Versatzleitung 46 ist eine Zuleitung 47 für Halbhydrat, kombiniert mit einer Wasserleitung vorgesehen. Mit dem beim Austritt mit Wasser benetzten Alpha-Sulfathalbhydrat, welches aus den Rückständen der Kalkwäsche von schwefelhaltigen Rauchgasen gewonnen wird, wird der Blasversatz verfestigt.

Die Abschnitte 28 und 29 sind im Ausführungsbeispiel im Unterschied zu dem Abschnitt 27 einteilig. Die Abschnitte 28 und 29 werden durch ihre Verbindung mit dem Abschnitt 27 von diesem mitgezogen.

Einer Veränderung der Bauhöhe und/oder der Baubreite wird durch Auswechselung der Abschnitte 28 und 29 Rechnung getragen. Wahlweise sind die Abschnitte 28 und 29 auch mehrteilig. Die einteilige Ausbildung hat gegenüber der mehrteiligen statische Vorteile.

Die mehrteilige Ausbildung des Messerschildes wird nach Figur 1 wie folgt wirksam: Nach Fertigstellen des Aufhauens 4 wird der aus dem Aufhauen austretende Walzenschrämlader mit einem Autokran aufgenommen, soweit behoben, bis er um 180° geschwenkt ist und dann zum Beginn des Aufhauens 5 auf die Sohle der Baugrube 2 wieder abgesetzt. Das gleiche gilt für den Abschnitt 27 des Messerschildes nach dessen Austreten aus dem Aufhauen 4 und Abkoppeln von den Abschnitten 28 und 29. Die Abschnitte 28 und 29 werden nach Abkoppeln des Abschnittes 27 mit Winden oder geeignetem Hydraulikwerkzeug in die Baugrube 2 gezogen und in gleicher Weise wie der Abschnitt 27 umgesetzt.

## Patentansprüche

1. Abdichtung für Deponien, kontaminierte Flächen oder dergleichen, wobei der abzudichtende Bereich unter Verwendung eines Messerschildes bergmännisch unterfahren wird, dadurch gekennzeichnet, daß der Messerschild in Vortriebsrichtung aus mehreren miteinander lösbar verbundenen Abschnitten (27, 28, 29) besteht oder ein Element einer Messerschildreihe (9, 10, 11) bildet.

2. Abdichtung nach Anspruch 1, dadurch gekennzeichnet, daß die Abschnitte (27, 28, 29) eine Länge von höchstens 3 m aufweisen.

3. Abdichtung nach Anspruch 1 oder 2, dadurch gekennzeichnet, daß im ersten Abschnitt die Abbauvorrichtung (25), im zweiten Abschnitt (28) eine Vorrichtung (41) zum Auslegen einer Abdichtungsfolie (42) und/oder Armierung und/oder Dränage und in einem dritten Abschnitt (29) eine Vorrichtung (46, 47) für Versatz oder Festiger angeordnet ist.

4. Abdichtung nach Anspruch 1, dadurch gekennzeichnet, daß das Element einer Messerschildreihe (9, 10, 11) eine maximale Elementbreite von 8 m besitzt.

5. Abdichtung nach Anspruch 1 oder 4, gekennzeichnet durch versetztes Aufhauen (6, 7, 8).

6. Abdichtung nach einem oder mehreren der Ansprüche 1 bis 5, gekennzeichnet durch einen Messervortrieb von mindestens 0,6 m in der Abbaufront.

7. Abdichtung nach einem oder mehreren der Ansprüche 1 bis 6, gekennzeichnet durch Verwendung eines an der Abbaufront hin- und hergehend bewegten Schrämladers (25) mit Kettenkratzer.

8. Abdichtung nach Anspruch 7, gekennzeichnet durch einen dem Kratzer nachgeordneten, längenänderbaren Bandförderer.

9. Abdichtung nach einem oder mehreren der Ansprüche 1 bis 8, gekennzeichnet durch Schwanzflossen am Messerschild.

## Claims

1. Sealing for dumps, contaminated sites or the like, the area to be sealed off being undercut in a mining fashion using a cutter shield, characterized in that the cutter shield consists of a plurality of detachably interconnected sections (27, 28, 29) in the direction of heading or forms an element of a series of cutter shields (9, 10, 11).

2. Sealing according to claim 1, characterized in that the sections (27, 28, 29) have a length of at most 3 m.

3. Sealing according to claim 1 or 2, characterized in that the extraction device (25) is arranged in the first section, a device (41) for laying a sealing sheet (42) and/or reinforcement and/or drainage is arranged in the second section (28) and a device (46, 47) for pneumatic (lacuna) and/or solidifier is arranged in a third section (29).

4. Sealing according to claim 1, characterized in that the element of a series of cutter shields (9, 10, 11) has a maximum element width of 8 m.

5. Sealing according to claim 1 or 4, characterized by offset rise heading (6, 7, 8).

6. Sealing according to one or more of claims 1 to 5, characterized by a cutter advance of at least 0.6 m in the extraction face.

7. Sealing according to one or more of claims 1 to 6, characterized by use of a shearer-loader (25), which is moved back and forth at the extraction face and has a chain scraper.

8. Sealing according to claim 7, characterized by a belt conveyor of variable length following on from the scraper.

9. Sealing according to one or more of claims 1 to 8, characterized by tail fins on the cutter shield.

## Revendications

1. Etanchement de décharges, surfaces contaminées ou analogues, dans lequel la zone à rendre étanche est reprise en sous-œuvre, selon la technique minière, avec emploi d'un bouclier à couteaux, caractérisé en ce que, dans la direction d'avance, le bouclier à couteaux est constitué de plusieurs tronçons (27, 28, 29) réunis l'un à l'autre de façon détachable, ou bien forme un élément d'une série de boucliers à couteaux (9, 10, 11).

2. Etanchement selon la revendication 1, caractérisé en ce que les tronçons (27, 28, 29) présentent une longueur d'au maximum 3m.

3. Etanchement selon la revendication 1 ou 2, caractérisé en ce que dans le premier tronçon est disposé le dispositif d'abattage (25), dans le second tronçon (28), un dispositif (41) pour déposer une feuille d'étanchéité (42) et/ou une armature et/ou un drainage et, dans un troisième tronçon (29), un dispositif (47) pour remblayage projeté et/ou consolidation.

4. Etanchement selon la revendication 1, caractérisé en ce que l'élément d'une série de boucliers à couteaux (9, 10, 11) présente une largeur maximale d'élément de 8 m.

5. Etanchement selon la revendication 1 ou 4, caractérisé par le décalage des zones de havage (6, 7, 8).

6. Etanchement selon l'une ou plusieurs des revendications 1 à 5, caractérisé par un avancement des couteaux d'au moins 0,6 m dans le front d'abattage.

7. Etanchement selon une ou plusieurs des revendications 1 à 6, caractérisé par l'emploi d'une haveuse-chargeuse (25), avec chenille racleuse et qui se déplace en un mouvement de va et vient le long du front d'abattage.

8. Etanchement selon la revendication 7, caractérisé par un transporteur à bande de longueur variable disposé en aval de la chenille racleuse.

9. Etachement selon l'une ou plusieurs des revendications 1 à 8, caractérisé par des plans fixes arrière sur le bouclier à couteaux.

FIG. 1

FIG. 2

FIG. 3

FIG. 4